# EUROPÄISCHE PATENTANMELDUNG

(11) **EP 3 061 554 A1**
(43) Veröffentlichungstag der Anmeldung: **31.08.2016**
(21) Anmeldenummer: 16151094.6
(22) Anmeldetag: 13.01.2016
(51) Int. Cl.: B23F 21/00, B23F 13/00, B23F 17/00

(54) **BEARBEITUNGSKOPF FÜR EINE VERZAHNMASCHINE UND VERFAHREN ZUR VERZAHNUNG EINES WERKSTÜCKES, INSBESONDERE EINER SCHNECKENWELLE ODER ZAHNSTANGE**

(30) Priorität: 26.02.2015 DE 102015002362
(71) Anmelder: Liebherr-Verzahntechnik GmbH, 87437 Kempten (DE)
(72) Erfinder: Geiser, Dr. Hansjörg, 87487 Wiggensbach (DE)
(74) Vertreter: Laufhütte, Dieter

(57) **Zusammenfassung**

Die vorliegende Erfindung betrifft einen Bearbeitungskopf für eine Verzahnmaschine, insbesondere eine Wälzfräs- oder Wälzschleifmaschine, zur Verzahnung eines Werkstückes, insbesondere einer Schneckenwelle oder Zahnstange, wobei der Bearbeitungskopf wenigstens zwei nebeneinander angeordnete Werkzeugspindeln umfasst.

## Beschreibung

Die Erfindung betrifft einen Bearbeitungskopf für eine Verzahnmaschine, insbesondere eine Wälzfräs- oder Wälzschleifmaschine, zur Verzahnung eines Werkstückes, insbesondere einer Schneckenwelle oder einer Zahnstange.

Eine Zahnstange ist eine vertikal montierte technische Vorrichtung mit Zähnen und wird meistens innerhalb eines Zahnstangenantriebs eingesetzt.

Schneckengetriebe sind Schraubwälzgetriebe, die aus einer Paarung einer Schnecke (Schneckenwelle) und einem darin kämmenden schrägverzahnten Schneckenrad bestehen. In den meisten Anwendungsfällen stehen dabei die Achsen von Schneckenwelle und Schneckenrad rechtwinklig zueinander. Eingesetzt werden diese Getriebe dort, wo in einem Schritt hohe Untersetzungen und/oder Selbsthemmung gefragt sind. Der Antrieb des Getriebes erfolgt dabei üblicherweise über die Schnecke.

Aufgrund der funktionsbedingten Relativbewegung bei Schraubwälzgetrieben findet zwischen den Flanken von Schnecke und Schneckenrad vor allem eine Gleitbewegung statt, daher haben Schneckenradgetriebe einen niedrigen Wirkungsgrad bei gleichzeitig hohen Übersetzungen. Um die Reibung im Getriebe möglichst gering zu halten, werden hohe Anforderungen an die Herstellgenauigkeit und Oberflächenbeschaffenheit der Zahnflanken gestellt.

Generell ist die Schnecke eine Sonderform eines schrägverzahnten Zahnrades. Der Winkel der Schrägverzahnung ist so groß, dass ein oder mehrere Zähne sich schraubenförmig in die Wellenachse winden. Hergestellt werden Schneckenräder vorzugsweise auf Verzahnmaschinen, da zur Herstellung eine Wälzkopplung zwischen dem Werkzeug (Wälzfräser) und dem Werkstück (Schneckenrad) notwendig ist. Dabei muss der verwendete Wälzfräser, abgesehen von gewissen Korrekturgrößen, mit der Schnecke (Schneckenwelle) des Getriebes formengleich sein. Schneckenräder werden häufig aus Kunststoff, Messing- oder Bronzelegierungen hergestellt.

Die zugehörige Schnecke (Schneckenwelle) kann ebenfalls auf einer Wälzfräsmaschine hergestellt oder einer Wälzschleifmaschine bearbeitet werden, wenn gewisse Randbedingungen gegeben sind. Da Schneckenräder häufig aus gehärtetem Stahl bestehen werden diese nach der Wärmebehandlung sehr häufig noch geschliffen. Weiterhin besteht die Möglichkeit Schnecken aber auch auf Universalfräsmaschinen mit Teileinrichtung oder auf entsprechend aufgerüsteten Drehmaschinen herzustellen. Weitere Verfahren sind Wälzschälen oder Wirbeln von Schnecken, wobei der Nachteil dieser Verfahren in den teuren, speziell auf das herzustellende Werkstück abgestimmten Spezialwerkzeugen zu sehen ist. Je nach Genauigkeitsanforderung, Abmessungen, Zähneanzahl, Modul und Flankenform sowie den herzustellenden Stückzahlen für die Schnecken wird ein entsprechendes Verfahren und eine entsprechende Maschine gewählt.

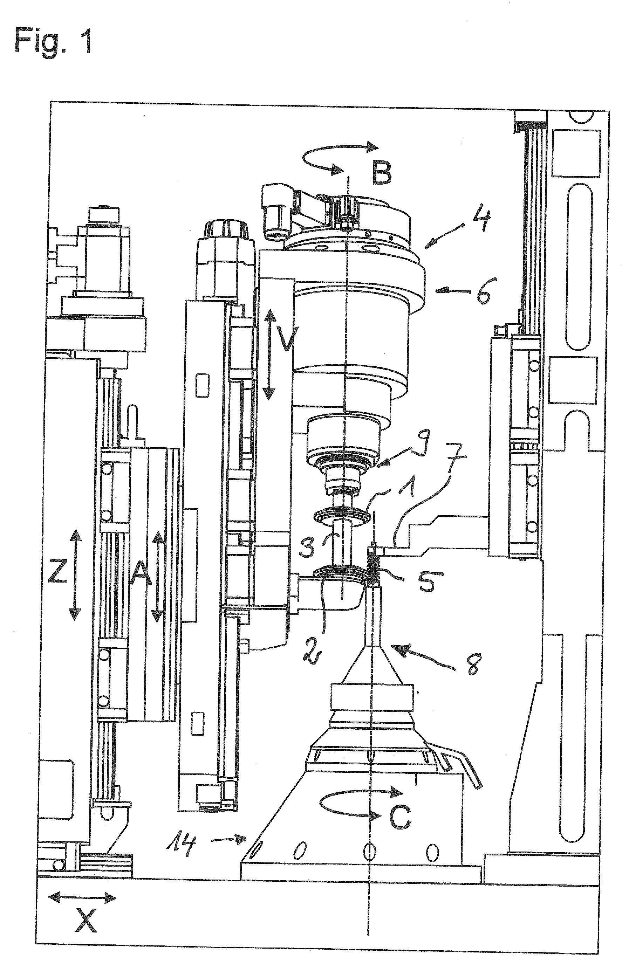

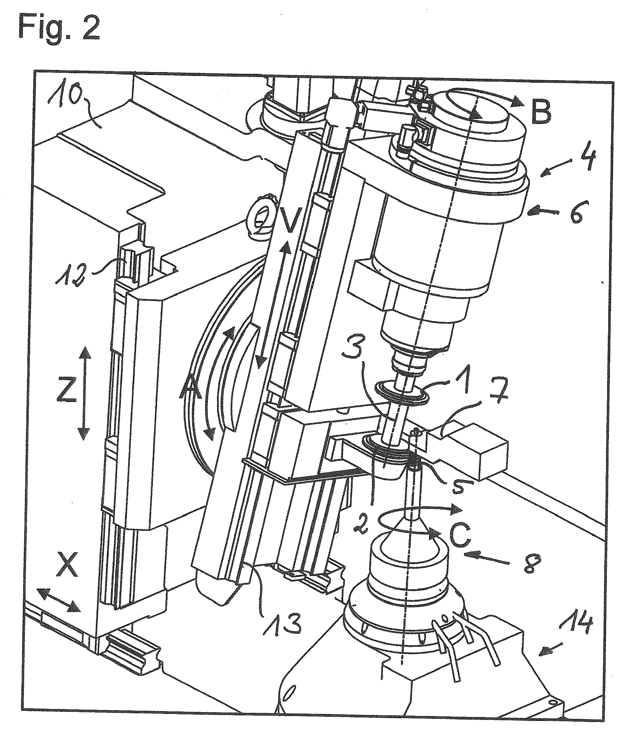

Bei der Herstellung von Schnecken auf Wälzfräsmaschinen nach dem Stand der Technik gemäß Fig. 1 und Fig. 2 werden üblicherweise anstatt eines Wälzfräsers ein oder mehrere spezielle Scheibenfräser 1, 2 auf dem Werkzeugaufnahmedorn 3 aufgespannt. Der Schlichtfräser 1 wird aus Qualitätsgründen dabei meist näher am Werkzeugantriebsmotor 4 montiert. Die Fräser 1, 2 werden mit Hilfe der Z- und V-Achse positioniert und durch Zustellung entlang der X-Achse nacheinander in Eingriff gebracht.

Die A-Achse dient zur Einstellung des Schrägungswinkels γₘ der Schnecke 5. Die Z-Achse dient in diesem Fall zur Positionierung des Fräskopfes 6.

Die herzustellende oder zu bearbeitende Schnecke 5 wird in der Werkstückspannvorrichtung 8 eingespannt und häufig an ihrem oberen Ende über eine Lünette 7 abgestützt. Der Bearbeitungskopf 6 der Verzahnmaschine benötigt auf Grund des Schrägungswinkels γₘ der Schnecke 5 einen größeren Schwenkbereich um den Scheibenfräser 1, 2 passend zur Schnecke zu positionieren. Ein gravierender Nachteil dieser Ausführungsform ist, dass die Schnecke 5 wegen drohender Kollisionen nicht über eine Spitze in ihrem Zentrum aufgenommen werden kann. Wie an dieser Figur recht gut erkennbar ist, würde das obere Werkzeug 1 mit einer Spitze zur Werkstückaufnahme kollidieren, wenn das untere Werkzeug 2 im Eingriff mit der Schnecke 5 ist. Außerdem muss die Werkzeugdornlänge 3 in Abhängigkeit der Schneckenlänge 5 angepasst werden, damit es nicht zu einer ungewollten Kollision des Werkzeugs 1 mit der Schnecke 5 kommt, wenn das Werkzeug 2 nahe an der Spannvorrichtung 8 die Schnecke 5 bearbeitet.

Der Abstand des Werkzeugs 1 vom Bearbeitungskopfhauptlager 9 muss entsprechend weit gewählt werden, damit es hier zu keiner Kollision kommt. Gerade bei kleinen Werkzeugdurchmessern und langen Schnecken 5 kann der Werkzeugdorn 3 recht dünn werden, was sich nachteilig auf die Stabilität auswirkt. Die Abstützung über die Lünette 7 lässt nur reduzierte Bearbeitungsparameter zu. Zudem ist eine Lünette 7 für den Einsatz beim Trockenfräsen nur bedingt geeignet. Die fliegende Lagerung der Lünette 7 weist gegenüber einer zweiseitigen Werkstückeinspannung/Abstützung im Werkstückzentrum deutliche Nachteile auf.

Die Erfindung sucht nach einer Lösung, um die vorstehende Problematik bei der Verzahnung oder Bearbeitung eines Werkstückes, insbesondere einer Schneckenwelle bzw. einer Zahnstange, zu überwinden.

Gelöst wird diese Aufgabe durch einen neuartigen Bearbeitungskopf für eine Verzahnmaschine gemäß den Merkmalen des Anspruchs 1. Vorteilhafte Ausgestaltungen des Bearbeitungskopfes sind Gegenstand der sich an den Hauptanspruch anschließenden abhängigen Ansprüche.

Gemäß Anspruch 1 wird ein Bearbeitungskopf für eine Verzahnmaschine, insbesondere eine Wälzfräs- oder Wälzschleifmaschine, zur Verzahnung und Bearbeitung eines Werkstückes, vorzugsweise in Form einer Schneckenwelle für ein Schneckengetriebe oder einer Zahnstange, vorgeschlagen. Erfindungswesentlich wird der Bearbeitungskopf mit wenigstens einer zusätzlichen Werkzeugspindel ausgestattet, der Bearbeitungskopf umfasst damit wenigstens zwei nebeneinander angeordnete Werkzeugspindeln zur Aufnahme entsprechender Werkzeuge. Es ist demnach nicht mehr notwendig, mehrere Werkzeuge auf ein und derselben Spindel aufzunehmen, obgleich dies natürlich nicht für den neuen Bearbeitungskopf ausgeschlossen sein soll.

Die Aufteilung der Bearbeitungswerkzeuge auf zwei separate und nebeneinander angeordnete Werkzeugspindeln bringt weitreichende Vorteile bei der Verzahnbearbeitung von Werkstücken mit sich. Insbesondere bei langbauenden Werkstücken kann durch die Aufteilung der Werkzeuge auf separate Werkzeugachsen neben der konventionellen Einspannung der Werkstückes auf dem Maschinentisch eine zusätzliche Fixierung an der Werkstückspitze erfolgen, wodurch das Werkstück deutlich stabiler aufgenommen werden kann. Dadurch lässt sich die Bearbeitungsqualität deutlich verbessern. Zudem erlaubt die stabilere Fixierung größere Zustellungen oder Vorschübe, wodurch die Bearbeitungszeit spürbar reduziert werden kann. Weiterhin ist eine begrenzte Spindellänge zur Aufnahme eines einzigen Werkzeuges ausreichend, was einen stabileren Werkzeuglauf auch ohne Gegenlager gewährleistet.

Das Werkstück ist bevorzugt mit vertikaler Längsrichtung eingespannt.

Bevorzugt ist eine Anordnung der wenigstens zwei Werkzeugspindeln im Wesentlich parallel zueinander. Der Antrieb der wenigstens zwei Werkzeugspindeln kann über separate Motoren oder alternativ über einen gemeinsamen Motor erfolgen. Bei der Verwendung eines gemeinsamen Antriebsaggregates wird vorzugsweise die Momentaufteilung über ein zwischengeschaltetes Verteilergetriebe erreicht. Bei der Verwendung von separaten Antriebsaggregaten eignen sich insbesondere Direktantriebe für die einzelnen Spindeln. Der Bearbeitungskopf umfasst vorzugsweise Führungsmittel für eine vershiftbare Aufnahme des Bearbeitungskopfes innerhalb einer Verzahnmaschine. Bevorzugt erstrecken sich die Rotationsachse der Werkzeugspindel in diesem Fall quer zur mittels der Führungsmittel erzielbaren Shiftrichtung des Bearbeitungskopfes.

Die wenigstens zwei Werkzeugspindeln können mit passenden Werkzeugdornen versehen sein, die eine Montage der Werkzeuge auf den Spindeln mit identischem Achsabstand zu den Wellenlagerungen oder alternativ mit unterschiedlichem Achsabstand zur Wellenlagerung erlauben. Das heißt die Werkzeuge können versetzt zueinander montierbar sein, um eine Überlappung und Kollision ihrer Arbeitsradien zu vermeiden. Besonders bevorzugt ist es in diesem Zusammenhang, wenn wenigstens eine der Werkspindeln einen passenden Dorn zur variablen Montage des Werkzeuges aufweist, um den Achsabstand zur Wellenlagerung flexibel anzupassen.

Bevorzugt ist die Montage der Werkzeuge mit identischem Achsabstand. Werden jedoch Werkzeuge mit großem Durchmesser verwendet, so kann unter Umständen eine zueinander versetzte Anordnung auf den parallelverlaufenden Spindeln sinnvoll sein, da sich ansonsten durch die großen Durchmesser und der gegebenenfalls überlappenden Arbeitsradien eine Kollision der beiden Werkzeuge ergeben kann. Durch die versetzte Anordnung können Werkzeuge mit sich überlappenden Durchmesser montiert und betrieben werden.

Die Werkzeugspindeln sind insbesondere für die Montage scheibenförmiger Werkzeuge geeignet, denkbar sind scheibenförmige Fräs- und/oder Schleifwerkzeuge, beispielsweise lässt sich eine Kombination aus Schrupp- und Schlichtwerkzeug auf den wenigstens zwei Werkzeugspindeln montieren. Weiterhin wäre auch der Einsatz von sogenannten Satzwerkzeugen denkbar, die sich aus mehreren einzelnen scheibenförmigen Werkzeugen zusammensetzbar sind.

Neben dem Bearbeitungskopf betrifft die vorliegende Erfindung eine Verzahnmaschine, insbesondere eine Wälzfräs- oder Wälzschleifmaschine, mit wenigstens einem Bearbeitungskopf gemäß der vorliegenden Erfindung. Die Verzahnmaschine zeichnet sich demnach durch dieselben Vorteile und Eigenschaften wie der erfindungsgemäße Bearbeitungskopf aus.

In einer vorteilhaften Ausgestaltung der Verzahnmaschine umfasst diese wenigstens eine Spitze, insbesondere eine kugelgelagerte Spitze, zur Fixierung des auf einem Maschinentisch aufgespannten Werkstückes während der Bearbeitung mit dem Bearbeitungskopf. Anders als aus dem Stand der Technik bekannt, können demnach Werkstücke mit gewisser achsialer Länge ausreichend stabil auf den Werkzeugtisch aufgespannt werden und dadurch eine stabile und qualitätswahrende Verzahnung ermöglichen. Alternativ oder zusätzlich ist ebenfalls die Fixierung über wenigstens eine Lünette denkbar.

Neben der erfindungsgemäßen Verzahnmaschine betrifft die vorliegende Erfindung weiterhin ein Verfahren zur Verzahnung eines Werkstückes, insbesondere einer Schneckenwelle oder Zahnstange, mit dem erfindungsgemäßen Bearbeitungskopf bzw. der erfindungsgemäßen Verzahnmaschine. Das erfindungsgemäße Verfahren zeichnet sich dadurch aus, dass das Werkstück nacheinander oder parallel mit auf unterschiedlichen Werkzeugspindeln des Bearbeitungskopfes montierten scheibenförmigen Werkzeugen verzahnt bzw. bearbeitet wird.

Besonders bevorzugt werden hier scheibenförmige Fräs- und/oder Schleifwerkzeuge verwendet. Gemäß einer bevorzugten Ausführungsform ist auf einer Werkzeugspindel ein scheibenförmiges Schruppwerkzeug, besonders bevorzugt ein Schruppfräser aufgenommen, während auf wenigstens einer weiteren Werkzeugspindel ein Schlichtwerkzeug, insbesondere Schlichtfräser montiert ist. Dadurch wird zunächst mit der ersten Werkzeugachse das Werkstück mittels des Schruppwerkzeuges grob vorbearbeitet und im Nachgang mit dem Schlichtwerkzeug der wenigstens zweiten Werkzeugspindel nachbearbeitet. Möglich ist jedoch auch eine gleichzeitige Bearbeitung eines Werkstückes mit den wenigstens zwei Werkzeugspindeln. Es lassen sich beispielsweise zwei benachbarte Lücken des Werkstückes bei entsprechenden Werkzeugdurchmessern annährend zeitgleich bearbeiten, wobei eine Lücke per Schruppprozess vorverzahnt wird, während eine zuvor bearbeitete Lücke annährend zeitgleich per Schlichtverfahren nachbearbeitet wird. Durch den Abstand der Werkzeugachsen ist die Bearbeitung zweier Lücken, d.h. der Eingriff der Werkzeuge nicht hundertprozentig synchron. Durch geeignete Wahl der Werkzeugdurchmesser kann jedoch eine Bearbeitung zweier Lücken in einem Prozessschritt erreicht werden, wobei die Werkzeuge nicht ganz synchron im Eingriff sind, sondern um den Werkzeugachsenabstand versetzt und damit auch geringfügig "zeitlich" versetzt.

Besonders bevorzugt ist es, wenn während der Ausführung des Verfahrens das Werkstück durch eine Spitze und/oder eine Lünette zusätzlich fixiert wird, um dadurch die Bearbeitung mit größerem Vorschub bzw. größerer Zustellung ausführen zu können.

Der Wechsel zwischen den Bearbeitungswerkzeugen der wenigstens zwei Werkzeugspindeln erfolgt insbesondere durch eine Vershiftung des Bearbeitungskopfs in V-Richtung gegenüber dem Maschinenständer in V-Richtung der CNC-Maschine.

Weiterhin ist es vorstellbar, dass bei unterschiedlichem Achsabstand zur Wellenlagerung der montierten Werkzeuge eine Justierung des Bearbeitungskopfes für den Einsatz des jeweiligen Werkzeuges in Z-Richtung bzw. Vertikalrichtung erfolgt.

Bei der Schneckenwellenbearbeitung erfolgt die Bearbeitungsbewegung, beispielsweise Fräsbewegung, vorzugweise durch Zustellung der Werkzeuge auf das Werkstück in X-Richtung, d.h. der Maschinenständer wird linear auf das eingespannte Werkstück bewegt, und einen Vorschub in Z-Richtung, gegebenenfalls in Kombination mit einer wälzgekoppelten Drehbewegung des Werkstücks um die C-Achse. Gefräst wird so lange bis ein Schneckengang fertig gefräst ist. Bei mehrgängigen Schnecken werden die einzelnen Gänge sequentiell bearbeitet. Der Schrägungswinkel wird über die A-Achse eingestellt, um die der Bearbeitungskopf gegenüber dem Maschinenständer verschwenkbar ist.

Bei der Zahnstangenbearbeitung steht der Maschinentisch, es erfolgt also keine Bewegung des Werkstückes um die C-Achse. Die Bearbeitungsbewegung, insbesondere Fräsbewegung, erfolgt über eine Bewegung des Werkzeuges entlang der V-Achse. Nachdem eine Lücke bearbeitet wird, wird der Bearbeitungskopf entlang der Z-Achse in Vertikalrichtung nach oben oder unten bewegt und die nächste Zahnlücke bearbeitet.

Nachdem wenigstens zwei Scheibenfräser am Bearbeitungskopf montiert sind, kann ein Schrupp- und ein Schlichtschnitt mit den zwei Fräsern in einem Bearbeitungsschritt für benachbarte Zahnlücken durchgeführt werden. Die Position der Werkzeuge zueinander wird über spezielle Werkzeugaufnahmen eingestellt. Diese Werkzeugaufnahmen müssen sich in ihrer Länge exakt um den Lückenabstand der Zahnlücken unterscheiden. Bei Satzwerkzeugen muss die Länge der Werkzeugaufnahmen entsprechend der Anzahl an Satzwerkzeugen und der damit bearbeiteten Zahnlücke gewählt werden.

Weitere Vorteile und Eigenschaften der Erfindung sollen im Folgenden anhand eines in den Figuren dargestellten Ausführungsbeispiels näher erläutert werden. Es zeigen:
- Figur 1:: eine Seitenansicht einer CNC Verzahnmaschine mit konventionellem Bearbeitungskopf;
- Figur 2:: eine Vorderansicht des konventionellen Bearbeitungskopfes der Maschine aus Figur 1;
- Figur 3:: eine Skizzendarstellung des Eingriffswinkels eines Werkzeuges zur Herstellung einer Schleifwelle;
- Figur 4:: die erfindungsgemäße Verzahnmaschine mit neuartigem Bearbeitungskopf;
- Figur 5:: Vorderansichten der Schleifmaschine gemäß Figur 4 zur Verdeutlichung des Werkzeugwechsels und
- Figur 6:: eine Detailansicht des erfindungsgemäßen Bearbeitungskopfes gemäß den Figuren 4 und 5.

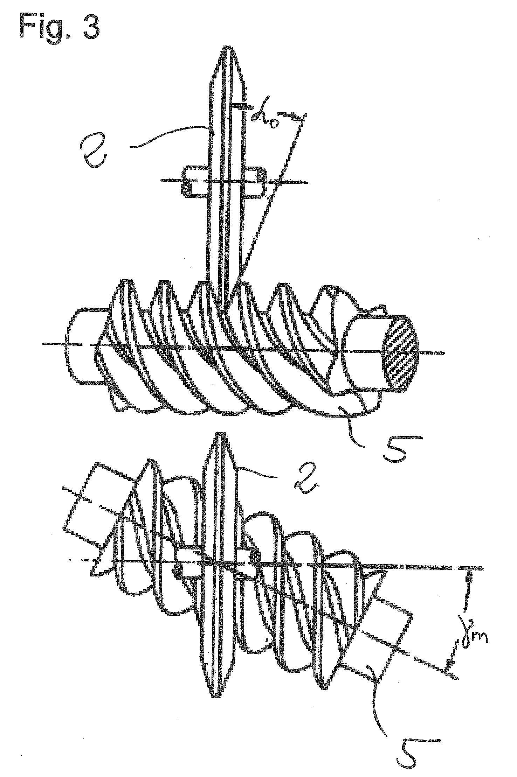

Die Figuren 1, 2 wurden bereits ausführlich im einleitenden Teil dieser Beschreibung diskutiert. Figur 3 zeigt eine Schneckenwelle 5 mit einem Scheibenfräser 2 im Eingriff. Der Flankenwinkel des Scheibenfräsers 2 wird mit dem Winkel α₀ bezeichnet, während der Schrägungswinkel der Schneckenwelle 5 mit γₘ bezeichnet wird.

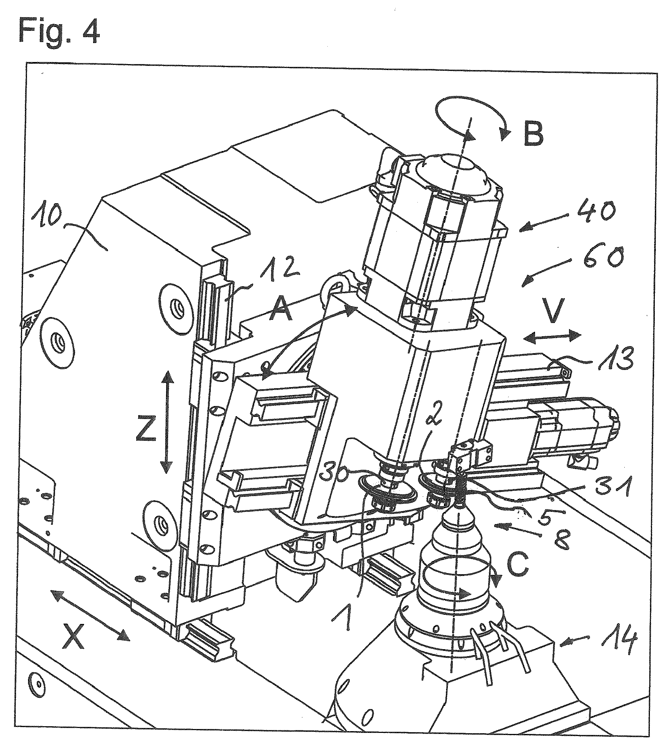

Die Figur 4 zeigt eine perspektivische Ansicht der erfindungsgemäßen Verzahnmaschine mit dem neuartig konstruierten Bearbeitungskopf 60. Bis auf den Bearbeitungskopf 60 entspricht die dargestellte Verzahnmaschine einer bekannten Wälzund Profilschleifmaschine mit den für die Bearbeitung notwendigen Freiheitsgraden. Im Einzelnen kann die CNC-Maschine die eingezeichneten Bewegungen A, B, C, V, X, Z ausführen, wobei die X-Achse die Radialbewegung des Ständerschlittens 10 in Richtung des vertikal eingespannten Werkstückes 5, V die Tangentialbewegung bzw. Shiftbewegung des Werkzeuges 1, 2 bzw. Bearbeitungskopfes 60 mittels des Tangentialschlittens 13 gegenüber dem Ständerschlitten 10, Z die Shiftbewegung des Bearbeitungskopfs 60 entlang des Axialschlittens 12 des Ständerschlittens 10Vertikalrichtung, B die Drehbewegung der Werkzeugspindeln 30, 31, C die Drehbewegung des Werkstückes 5 und A die Schwenkbewegung des Bearbeitungskopfes 60 gegenüber dem Maschinenständer 10 bezeichnet.

Auf dem Tangentialschlitten 13 der Verzahnmaschine ist nunmehr der konventionelle Bearbeitungskopf 6 durch den neuartigen Bearbeitungskopf 60 ersetzt worden. Der Bearbeitungskopf 30 ist dabei ebenfalls in V-Richtung auf dem Schlitten 13 vershiftbar. Zudem besitzt der Bearbeitungskopf 30 einen Motor 40 zum Antrieb der separaten Werkzeugspindeln 30, 31, die parallel zueinander angeordnet sind und senkrecht auf der Shiftachse des Tangentialschlittens 13 stehen. Die Shiftrichtung verläuft nunmehr also quer zu den Rotationsachsen B1, B2 der Spindeln 30, 31. Innerhalb des Bearbeitungskopfes 30, d.h. innerhalb des Kopfgehäuses, wird die Antriebskraft des gemeinsamen Antriebsmotors 40 auf die beiden Werkzeugachsen B1, B2 aufgeteilt. Das Schwenken der Werkzeuge 1, 2 und des Bearbeitungskopfes 60 gegenüber dem Maschinenständer 11 erfolgt gemeinsam über die Schwenkachse A-Achse.

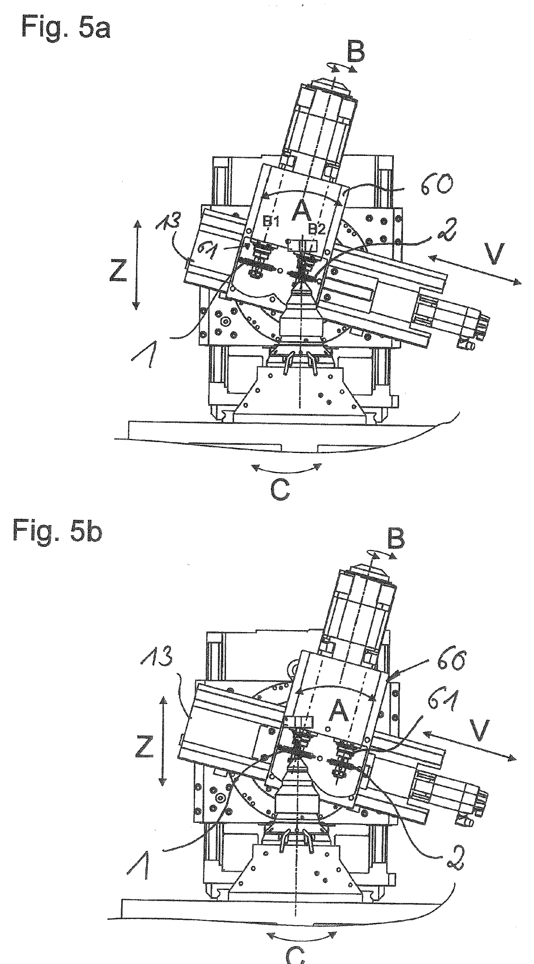

Der Wechsel zwischen den Bearbeitungswerkzeugen 1, 2 zur Bearbeitung der auf dem Maschinentisch 14 mittels der Aufnahmevorrichtung 8 aufgespannten Schneckenwelle 5 erfolgt über eine Vershiftung mittels des Tangentialschlittens 13 in Richtung der V-Achse. In der Figur 5a wird die Schneckenwelle 5 zunächst mit dem auf der Werkzeugspindel 31 aufgespannten scheibenförmigen Schruppfräser 2 vorbearbeitet. Für den Schlichtprozess wird der scheibenförmige Schlichtfräser 1 auf der Werkzeugspindel 30 benötigt. Dazu wird der Bearbeitungskopf 60 in V-Richtung vershiftet, bis der Schlichtfräser 1 mit der Schneckenwelle 5 in Eingriff gebracht wird.

Die Fräsbewegung erfolgt sowohl für den Schrupp- als auch für den Schlichtvorgang durch Zustellung der Scheibenfräser 1, 2 auf das Werkstück 5 in X-Richtung und einem Vorschub in Z-Richtung. Zudem erfolgt eine wälzgekoppelte Drehbewegung des Werkstücks 5 um die C-Achse. Der Schrägungswinkel γₘ der Schneckenwelle 5 lässt sich über die Schwenkachse A einstellen. Gefräst wird so lange bis ein Schneckengang fertiggestellt ist. Bei mehrgängigen Schneckenwellen wird auf diese Weise ein Gang nach dem anderen bearbeitet.

Wie in den Figuren 4, 5 und 6 dargestellt ist, sind beide Werkzeuge 1, 2 mit identischem Abstand zur Wellenlagerung 61 des Bearbeitungskopfes 60 angeordnet, d.h. beide Werkzeuge 1, 2 sind mit identischem Axialabstand zur oberen Kante des Bearbeitungskopfes auf den Wellen 30, 31 montiert. Kommen scheibenförmige Werkzeuge 1, 2 mit großem Durchmesser zum Einsatz, kann der Fräserabstand zum Bearbeitungskopfhauptlager 61 für jeden Fräser 1, 2 unterschiedlich gewählt werden, damit es aufgrund der überlappenden Radien der scheibenförmigen Werkzeuge 1, 2 nicht zu Kollisionen kommt. Dadurch kommen die Vorteile großer Fräsdurchmesser zum Tragen ohne dass die Abstände der beiden Werkzeugspindeln 30, 31 zueinander zu groß gewählt werden müssen.

Zudem ermöglicht die Bauform des Bearbeitungskopfes 60 einen kurzen Abstand der montierten Werkzeuge 1, 2 zum Bearbeitungskopfhauptlager 61. Dadurch lassen sich die Werkzeuge äußerst stabil einspannen, ohne dass ein Gegenlager der Werkzeugspindeln 30, 31 notwendig wird. Bei dieser Anordnung beeinflussen die Werkzeuge 1, 2 sich auch nicht gegenseitig im Eingriff, da sie nicht auf einem gemeinsamen Fräsdorn 3 angeordnet sind.

Sind beide Werkzeuge 1, 2 mit unterschiedlichem Abstand zum Hauptlager 61 des Bearbeitungskopfes 30 auf den Werkzeugspindeln 30, 31 montiert, so muss bei einem Werkzeugwechsel nicht nur um die V-Achse vershiftet, sondern zudem über die Z-Achse entlang des Axialschlittens 12 das Werkzeug 1, 2 in die passende Eingriffsposition gebracht werden.

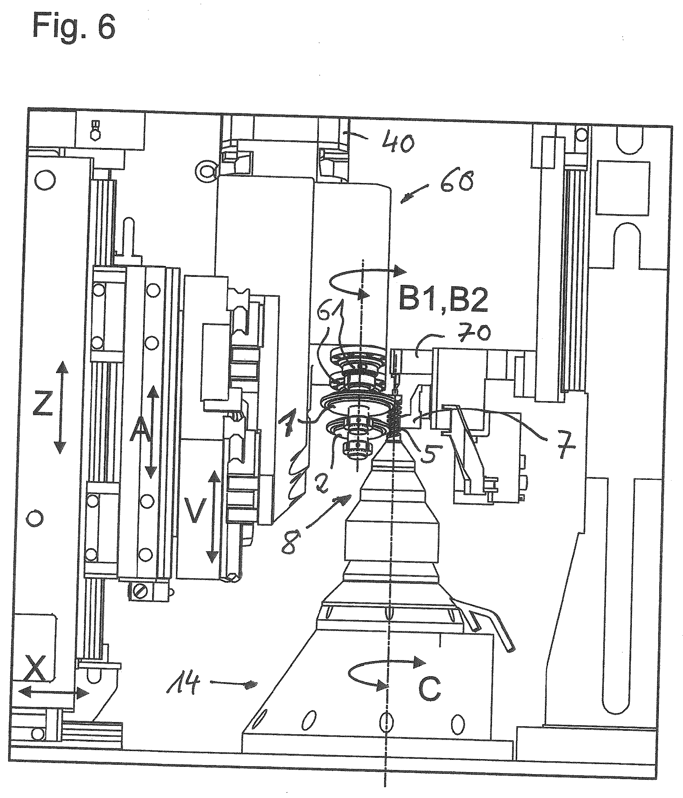

In der Figur 6 ist gut erkennbar, dass der freigewordene Arbeitsraum in Verlängerung der Schneckenwelle 5 noch gut genutzt werden kann, um beispielsweise eine Spitze 70 im Zentrum der Schnecke 5 zu platzieren. Zusätzlich kann die Schneckenwelle 5 auch noch wie bisher mit einer Lünette 7 abgestützt werden. Somit kann das Werkstück 5 deutlich stabiler aufgenommen werden, wodurch entweder dessen Bearbeitungsqualität verbessert wird oder aber die Bearbeitungszeit reduziert werden kann, indem mit größeren Zustellungen oder Vorschüben gearbeitet wird.

Alternativ lassen sich mit dem erfindungsgemäßen Bearbeitungskopf 60 auch Zahnstangen bearbeiten. Bei der Zahnstangenbearbeitung steht der Tisch 14, d.h. die eingespannte Zahnstange dreht sich nicht um die Werkstückachse C. Die Bearbeitungsbewegung, insbesondere Fräsbewegung, zur Verzahnung der Zahnstange erfolgt über eine Bewegung des Werkzeuges, vorzugsweise Scheibenfräsers 1, 2 entlang der V-Achse. Nachdem eine Zahnlücke vollständig bearbeitet wurde, wird der Bearbeitungskopf 60 entlang der Z-Achse nach oben oder unten bewegt, um das Werkzeug in Eingriff mit der nächsten Zahnlücke zu bringen. Jede Zahnlücke kann abwechselnd mit dem ersten und zweiten Werkzeug 1, 2 bearbeitet werden.

Alternativ können die Werkzeuge 1, 2 auch in einem Prozessschritt mit benachbarten Zahnlücken der Zahnstange in Eingriff gebracht werden. Beispielsweise wird eine Zahnlücke mit einem Schruppfräser 2 grob vorgefräst, während der zweite Schlichtfräser 1 eine zuvor vorgefräste Zahnlücke per Schlichtbearbeitung nachbearbeitet. Die Position der Fräser 1, 2 zueinander wird über spezielle Werkzeugaufnahmen eingestellt, die den Versatz der Fräser 1, 2 zueinander exakt um den Lückenabstand der Zahnlücken einstellt.

## Patentansprüche

1. Bearbeitungskopf für eine Verzahnmaschine, insbesondere eine Wälzfräs- oder Wälzschleifmaschine, zur Verzahnung eines Werkstückes, insbesondere einer Schneckenwelle oder Zahnstange,
**dadurch gekennzeichnet,**
**dass** der Bearbeitungskopf wenigstens zwei nebeneinander angeordnete Werkzeugspindeln umfasst.

2. Bearbeitungskopf nach Anspruch 1, **dadurch gekennzeichnet, dass** die wenigstens zwei Werkzeugspindeln im Wesentlichen parallel zueinander verlaufen und der Bearbeitungskopf weiterhin vorzugsweise Führungsmittel zur verhiftbaren Aufnahme innerhalb einer Verzahnmaschine umfasst, wobei die Rotationsachsen der Werkzeugspindeln quer zur Shiftrichtung orientiert sind.

3. Bearbeitungskopf nach einem der vorhergehenden Ansprüche, **dadurch gekennzeichnet, dass** die wenigstens zwei Werkzeugspindeln durch separate Motoren oder einen gemeinsamen Motor mit anschließendem Verteilergetriebe angetrieben sind.

4. Bearbeitungskopf nach einem der vorhergehenden Ansprüche, **dadurch gekennzeichnet, dass** wenigstens ein Werkzeugdorn der wenigstens zwei Werkzeugspindeln eine Montage des Werkzeuges mit variablen Achsabstand zur Wellenlagerung der Werkzeugspindel ermöglicht.

5. Bearbeitungskopf nach einem der vorhergehenden Ansprüche, **dadurch gekennzeichnet, dass** die Werkzeuge der wenigstens zwei Werkzeugspindeln mit identischem und/oder abweichendem Achsabstand zu ihrer jeweiligen Wellenlagerung montierbar sind.

6. Bearbeitungskopf nach einem der vorhergehenden Ansprüche, **dadurch gekennzeichnet, dass** auf den Werkzeugspindeln scheibenförmige Werkzeuge aufnehmbar sind, insbesondere scheibenförmige Fräs- und/oder Schleifwerkzeuge, wobei vorzugsweise auf den Werkzeugspindeln Werkzeuge mit identischem oder abweichenden Durchmesser aufnehmbar sind, wobei sich die Durchmesser der Werkzeuge überlappen können.

7. Verzahnmaschine, insbesondere Wälzfräs- oder Wälzschleifmaschine, mit wenigstens einem Bearbeitungskopf gemäß einem der vorhergehenden Ansprüche, wobei vorzugsweise die Shiftbewegung des Bearbeitungskopfes mittels des Tangentialschlittens in V-Richtung quer zur Rotationsachse der Werkzeugspindeln verläuft und besonders vorzugsweise eine Spitze, insbesondere kugelgelagerte Spitze, zur Fixierung des Werkstückes während der Bearbeitung mit dem Bearbeitungskopf und/oder eine Lünette zur Fixierung des Werkstückes während der Bearbeitung mit dem Bearbeitungskopf vorgesehen ist.

8. Verfahren zur Verzahnung eines Werkstückes, insbesondere einer Schneckenwelle oder einer Zahnstange, mit einem Bearbeitungskopf gemäß einem der Ansprüche 1 bis 7 bzw. einer Verzahnmaschine gemäß einem der Ansprüche 8 bis 10, **dadurch gekennzeichnet, dass** das Werkstück nacheinander oder annähernd zeitgleich mit den auf unterschiedlichen Werkzeugspindeln des Bearbeitungskopfes montierten scheibenförmigen Werkzeugen, insbesondere Fräs- und/oder Schleifscheiben, verzahnt wird.

9. Verfahren nach Anspruch 8, **dadurch gekennzeichnet, dass** eine Werkzeugspindel ein scheibenförmiges Schruppwerkzeug aufnimmt und auf einer weiteren Werkzeugspindel ein Schlichtwerkzeug montiert ist, wobei vozugsweise das Werkstück während der Bearbeitung durch eine Spitze und/oder eine Lünette fixiert wird..

10. Verfahren nach Anspruch 8, **dadurch gekennzeichnet, dass** auf einer oder beiden Werkzeugspindeln Satzwerkzeuge montiert ist, wobei vorzugsweise das Werkstück während der Bearbeitung durch eine Spitze und/oder eine Lünette fixiert wird.

11. Verfahren nach einem der vorhergehenden Ansprüche, **dadurch gekennzeichnet, dass** ein Wechsel des Bearbeitungswerkzeuges durch eine Shiftbewegung des Bearbeitungskopfes in V-Richtung erfolgt.

12. Verfahren nach einem der vorhergehenden Ansprüche 8 bis 11, **dadurch gekennzeichnet, dass** bei mit unterschiedlichem Achsabstand zur Wellenlagerung montierten Werkzeugen eine Justierung des Bearbeitungskopfes in Z-Richtung bzw. Vertikalrichtung erfolgt.

13. Verfahren nach einem der Ansprüche 8 bis 12, **dadurch gekennzeichnet, dass** zur Verzahnung einer Schneckenwelle eine Bearbeitungsbewegung durch Zustellung des Werkzeuges auf das Werkstück in X-Richtung und durch Vorschub in Z-Richtung erfolgt, vorzugsweise in Kombination mit einer wälzgekoppelten Drehbewegung des Werkstücks um die C-Achse.

14. Verfahren nach einem der vorhergehenden Ansprüche 8 bis 12, **dadurch gekennzeichnet, dass** zur Verzahnung einer Zahnstange die Bearbeitungsbewegung über eine Bewegung des Werkzeugs entlang der V-Achse bei stehendem Maschinentisch erfolgt und nach der Bearbeitung einer Zahnlücke der Bearbeitungskopf entlang der Z-Achse nach oben oder unten bewegt wird, um die nächste Zahnlücke zu bearbeiten.

15. Verfahren nach Anspruch 14, **dadurch gekennzeichnet, dass** mittels wenigstens zwei auf separaten Werkzeugspindeln aufgespannten Werkzeugen eine Verzahnbearbeitung benachbarter Zahnlücken, idealerweise einen Schrupp- und Schlichtschnitt benachbarter Zahnlücken der Zahnstange in einem Prozessschritt ausgeführt wird.
